(19) Europäisches Patentamt
European Patent Office
Office européen des brevets

(11) **EP 1 406 025 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(51) Int Cl.:
***F16C 33/72*** *(2006.01)*

(21) Anmeldenummer: **03021351.6**

(22) Anmeldetag: **20.09.2003**

(54) **Wellenlippendichtung**

Rotary shaft lip seal

Joint d'étanchéité à lèvres élastiques pour arbre rotatif

(84) Benannte Vertragsstaaten:
**AT BE BG CH CY CZ DE DK EE ES FI FR GB GR HU IE IT LI LU MC NL PT RO SE SI SK TR**

(30) Priorität: **04.10.2002 DE 10246398**

(43) Veröffentlichungstag der Anmeldung:
**07.04.2004 Patentblatt 2004/15**

(73) Patentinhaber: **Schaeffler KG**
**91074 Herzogenaurach (DE)**

(72) Erfinder:
• **Mause, Elmar**
**91448 Emskirchen (DE)**

• **Peschke, Harald**
**90587 Veitsbronn (DE)**
• **Kruhöffer, Wolfram**
**91086 Aurachtal (DE)**
• **Traudt, Thomas**
**91257 Pegnitz (DE)**
• **Krischer, Horst**
**91056 Erlangen (DE)**

(56) Entgegenhaltungen:
**EP-A- 0 807 775**      **EP-A- 0 866 249**
**WO-A-80/01405**      **DE-A1- 3 843 337**
**US-A- 3 822 890**

**Beschreibung**

**Gebiet der Erfindung**

Die vorliegende Erfindung bezieht sich auf eine Dichtungsanordnung, die eine als Wellenlippendichtung, ausgebildete Dichtung sowie einen Lagerring mit einer Nut und eine rotierende Welle umformt. Die aus elastischem Material hergestellte Dichtung ist zur Sströmungsmitteldichten Trennung von Druckräumen vorgesehen, insbesondere eingesetzt in Wälzlagern von Wasserpumpen für Brennkraftmaschinen. Die Wellenlippendichtung ist dabei zwischen zwei relativ zueinander bewegten Bauteilen angeordnet. Die drehstarr, vorzugsweise in einer Nut, eingesetzte Dichtung bildet eine erste radiale Dichtlippe, an die sich eine zweite axiale Dichtlippe anschließt. Dabei ist die radiale, zumindest eine Dichtkante aufweisende Dichtlippe von einem Federmittel unterstützt an der in Richtung einer Symmetrieachse der Dichtung ausgerichteten Welle abgestützt. Die weitere axiale Dichtlippe ist in einer Einbaulage über zumindest eine Dichtkante an einer senkrecht zu der Symmetrieachse der Dichtung ausgerichteten Anlagefläche abgestützt. Zur Versteifung der Wellenlippendichtung ist eine Armierung vorgesehen, die vorzugsweise in einem radialen Abschnitt der Dichtung integriert und zumindest einseitig von dem elastischen Dichtungsmaterial umschlossen ist.

**Hintergrund der Erfindung**

Eine Wellenlippendichtung mit einem zuvor genannten Aufbau ist beispielsweise aus der DE 38 43 337 A1 bekannt. Die axiale Dichtlippe dieser bekannten Dichtung stützt sich in der Einbaulage mit einer großen axialen Überdeckung an der Anlagefläche einer Schleuderhülse ab. Die relativ kurze Länge der axialen Dichtlippe in Verbindung mit der großen axialen Überdeckung zwischen der Axiallippe und der Anlagefläche führt zu einer erhöhten Anpresskraft, verbunden mit einer unzulässig hohen Überhitzung. Speziell bei hohen Drehzahlen des Bauteils, kommt es dabei zu einem starken Verschleiß, wobei die Dichtlippe im Abstützbereich "verbrennen" kann, was die Funktionsfähigkeit der Dichtung negativ beeinflusst.

Speziell bei einer Verwendung der Wellenlippendichtung in einem Wälzlager, das in einer Kühlwasserpumpe für Brennkraftmaschinen eingesetzt ist, wird eine Abdichtung der Wasserpumpenlager gefordert, um eine Penetration von Wasser, Wasserdampf oder ähnlichen Medien wie Kühlflüssigkeit dauerhaft zu unterbinden. Wälzlagerdichtungen für Wasserpumpen erfordern zum Schutz gegen den Eintritt von Flüssigkeiten in flüssiger oder gasförmiger Form, das sowohl die Radiallippe als auch die Axiallippe der Dichtung stets permanent mit den Gegenlaufflächen über die gesamte Lebensdauer des Wälzlagers dichtend in Kontakt stehen.

**Zusammenfassung der Erfindung**

Die Nachteile der bekannten Lösung berücksichtigend, liegt der Erfindung die Aufgabe zu Grunde, eine Dichtung zu konzipieren, um die Sensibilität der Dichtlippenüberdeckung unabhängig von der Temperatur und der Drehzahl des mit den Dichtlippen der Dichtung zusammenwirkenden Bauteils zu reduzieren.

Die zuvor genannte Problemstellung ist durch die kennzeichnenden Merkmale von Anspruch 1 gelöst.

Gemäß der Erfindung ist die axiale Dichtlippe im ungespannten, spannungslosen, nicht eingebauten Zustand der Dichtung, zu deren Symmetrieachse in einem Anstellwinkel von $\geq 35°$ ausgerichtet. Ausgehend von der Dichtkante der radialen Dichtlippe erstreckt sich die axiale Dichtlippe im spannungslosen Zustand der Dichtung über eine Länge von $\geq 1,4$ mm. Weiterhin ist eine Einbaulage für die Wellenlippendichtung vorgesehen, bei der sich zwischen der axialen Dichtlippe und der zugehörigen Anlagefläche bzw. Dichtfläche eine Überdeckung von 0,05 bis 0,55 mm einstellt. Diese Maßnahmen gemeinsam bewirken eine reduzierte Sensibilität der Überdeckung der axialen Dichtlippe auf die Temperaturentwicklung zwischen der Axiallippe und der zugehörigen Dichtfläche im eingebauten Zustand. Die erfindungsgemäßen Maßnahmen erhöhen wirksam die Verschließbeständigkeit der axialen Dichtlippe im Abstützbereich, wodurch sich die Funktion und die Lebensdauer der axialen Dichtlippe und damit der Dichtung verbessert. Dieses Ziel unterstützend, ist ergänzend eine Härte von $\leq 75$ Shore A für den Dichtwerkstoff vorgesehen, der sich positiv auf die Elastizität der axialen Dichtlippe auswirkt.

Die erfindungsgemäße Vergrößerung des Anstellwinkels, mit dem die axiale Dichtlippe an der zugehörigen Anlagefläche abgestützt ist, in Verbindung mit einer verlängerten Axialdichtlippe sowie einer Vermeidung eines zu harten Dichtungswerkstoffes verbessert entscheidend die Elastizität der Axiallippe und bewirkt eine konkrete Lösung der dieser Erfindung zugrunde liegenden Aufgabenstellung.

Weitere vorteilhafte Ausgestaltungen der Erfindung sind Gegenstand der abhängigen Ansprüche 2 bis 26.

In einer vorteilhaften Weiterbildung der Erfindung ist die axiale Dichtlippe beabstandet zu deren Dichtkante mit einem abgewinkelten Abschnitt versehen. Die zusätzliche Abwinklung der Axiallippe bewirkt eine weitere Steigerung der Elastizität. Erfindungsgemäß kann die zusätzliche Abwinklung sowohl radial nach außen als auch radial nach innen ausgerichtet sein. Für Axiallippen mit einem gegenüber der übrigen Dichtlippe radial nach innen abgewinkelten zusätzlichen Abschnitt bietet es sich an, einen Neigungswinkel "β" von $\geq 60°$ vorzusehen. Der Neigungswinkel "β" für den abgewinkelten Abschnitt verläuft dabei in einem Winkel $\geq 60°$ rechtwinklig zu der Symmetrieachse der Dichtung.

Alternativ kann die Axiallippe einen endseitig abgewinkelten von der Symmetrieachse ausgehend radial nach außen abgewandten Abschnitt aufweisen. Der so abgewinkelte Endabschnitt der Axiallippe schließt dabei einen Steigungswinkel "δ" ≧ 40° ein, bezogen auf einen radial zu der Symmetrieachse ausgerichteten Schenkel.

Als weitere konstruktive Maßnahme, die Elastizität der axialen Dichtlippe zu verbessern schließt die Erfindung in dem Bereich einer Abwinklung, einem Übergang zwischen dem Anstellwinkel einerseits und dem Steigungswinkel bzw. dem Neigungswinkel der Axialdichtung andererseits, eine ringförmige Ausnehmung bzw. Hohlkehle ein. Diese auch als eine Entlastungsnut zu bezeichnende Ausnehmung kann sowohl auf der Innenseite als auch auf der Außenseite der axialen Dichtung vorgesehen werden. Damit stellt sich eine bewusste Materialverdünnung der Axiallippe ein, zur Bildung eines Biegegelenks, wodurch sich vorteilhaft ein biegeweicher Endabschnitt der Axiallippe einstellt. Damit verbunden ergibt sich eine optimale Anpassung der axialen Dichtlippe an der zugehörigen Anlagefläche, ohne Überschreitung einer zulässigen Abstützkraft.

Erfindungsgemäß ist die innenseitig an der axialen Dichtlippe angeordnete Hohlkehle vorteilhaft als ein Schmierstoffreservoir nutzbar. Dabei ermöglicht die geometrische Formgebung, insbesondere eine halbrundartig geformte Hohlkehle, dass feste Schmierstoffteile in der Hohlkehle verbleiben. Ölanteile des Schmierstoffs dagegen gelangen radial nach außen, d. h. in die Abstützzone der axialen Dichtlippe bzw. dessen Dichtkante und gewährleisten damit einen erforderlichen Ölfilm zwischen der Dichtkante und der zugehörigen Anlagefläche.

Die geometrische Gestaltung der erfindungsgemäßen Dichtung sieht weiterhin einen definierten Wandstärkenverlauf vor. Im spannungslosen Zustand der Dichtung verjüngt sich die Wandstärke ausgehend von der Dichtkante der radialen Dichtlippe bis zum freien Ende von ≧ 0,9 auf ≧ 0,2 mm. Eine derartig gestaltete Dichtlippe stellt ein Optimum zwischen einer ausreichenden Festigkeit bzw. Steifigkeit einerseits und einer gewünschten hohen Elastizität andererseits dar.

Weitere vorteilhafte Ausgestaltungen der Erfindung beziehen sich auf Maßnahmen den Kontaktbereich zwischen der Axiallippe und der zugehörigen Anlagefläche zu minimieren bzw. diesen Bereich einzugrenzen. Dazu bietet es sich an, die Anlagefläche mit einer entsprechenden Struktur zu versehen, wodurch sich die Abstützfläche der Dichtlippe reduziert. Als strukturierte Anlagefläche eignet sich dazu beispielsweise eine Waffelung. Die Waffelung bildet eine geometrische Struktur, die vorzugsweise kreisbogenartig, lokal in die Anlagefläche eingebracht ist oder die alternativ aus der Anlagefläche hervortretend angeordnet sein kann. Die reduzierte Kontaktfläche verringert die Wärmeeinleitung in die Axiallippe. Weiterhin begünstigt die strukturierte Anlagefläche die Aufnahme von Schmiermittel und gewährleistet damit einen für die Lebensdauer der Dichtlippe erforderlichen Schmierfilm zwischen der Dichtkante der Axiallippe und der zugehörigen Anlagefläche.

Alternativ zu einer strukturierten Anlagefläche schließt die Erfindung eine axiale Dichtlippe ein, deren Stirnfläche mit einer Struktur versehen ist. Auch diese Maßnahme führt zu einer gewünschten reduzierten Kontaktfläche der Axiallippe gegenüber der zugehörigen Anlagefläche.

Erfindungsgemäß ist weiterhin eine Beschichtung zumindest im Kontaktbereich der axialen Dichtlippe mit der zugehörigen Anlagefläche vorgesehen. Dazu eignet sich insbesondere eine PTFE-Beschichtung der Dichtkantenstirnseite bzw. des freien Endes der Axiallippe. Alternativ zu einer Beschichtung der Axiallippe bietet es sich an, die Anlagefläche partiell im Bereich der Abstützung der axialen Dichtlippe reibungsmindernd zu beschichten. Vorzugsweise ist für die Anlagefläche ebenfalls eine PTFE-Beschichtung vorgesehen. Außerdem kann bei Bedarf sowohl die Anlagefläche als auch die Stirnseite der Axiallippe reibungsmindernd beschichtet werden.

Zur Steigerung der Abdichtsicherheit der axialen Dichtlippe ist diese innenseitig an der zur Anlagefläche gerichteten Endzone mit Drallrippen versehen. Die Anordnung dieser Drallrippen erfolgt so, dass sich eine gewünschte Rückförderung des Schmierstoff einstellt, der sich in Richtung des Dichtspaltes bewegt, wodurch sich eine Verbesserung der Abdichtung einstellt. Vorteilhaft bietet es sich an, die Dichtlippe mit einem Wechseldrall zu versehen, der einen drehrichtungsunabhängigen Einbau der Dichtung ermöglicht. Dazu eignet sich beispielsweise eine in Richtung der Symmetrieachse der Dichtung ausgerichtete Pfeilstruktur, die unabhängig von der Drehrichtung stets eine Rückführung des Schmierstoffs sicherstellt.

Die erfindungsgemäße Wellenlippendichtung ist im eingebauten Zustand vorteilhaft einer Schleuderhülse zugeordnet, die gemeinsam einen kreisringförmigen Bereich zwischen einem äußeren Wälzlagerring und einer Welle wirksam abdichten. Die Schleuderhülse ist dabei an der Welle lage- und drehfixiert und bildet die Anlagefläche für die axiale Dichtlippe der Welienlippendichtung. Alternativ zu einer Schleuderhülse, die ausschließlich einen radial zu der Mantelfläche der Welle ausgerichteten Bereich bildet, schließt die Erfindung eine Schleuderhülse ein, die zusätzlich einen zylindrischen Abschnitt umfasst. Dabei bildet die Mantelfläche des zylindrischen, die Welle umschließenden Abschnitts der Schleuderhülse eine Anlagefläche für die radiale Dichtlippe und der radiale Bord der Schleuderhülse die Anlagefläche für die axiale Dichtlippe der erfindungsgemäßen Wellenlippendichtung.

Vorteilhaft ist der zylindrische Abschnitt der Schleuderhülse zumindest außenseitig mit einer umlaufenden Einführschräge versehen. Diese Maßnahme vereinfacht einen sequentiellen Einbau der Bauteile, Dichtung und Schleuderhülse, bei dem nach Montage der Dichtung die Welle einschließlich der zugehörigen Schleuderhülse axial in das Wälzlager eingeführt wird. Die Einführschräge ermöglicht eine zerstörungsfreie Montage der radialen Dichtlippe, da diese bei einer axialen Zuführung der Schleuderhülse mittels der Einführschräge radial aufgeweitet wird und ohne Beschädigung und Gefahr eines Einrisses, die Einbaulage auf der Mantelfläche des zylindrischen Abschnitts der Schleuderhülse einnehmen kann. Zusätzlich zu einer außenseitigen Einführschräge bietet es sich an, den zylindrischen Abschnitt stirnseitig mit einer innenseitigen, umlaufenden Einführschräge, einem Radius oder eine Fase zu versehen, um die Montage des Schleuderrings auf die Welle zu vereinfachen.

Als Maßnahme, die Dichtwirkung der erfindungsgemäßen Wellenlippendichtung zu verbessern bietet es sich außerdem an, die radiale Dichtlippe und/ oder die axiale Dichtlippe mit zwei oder mehr Dichtkanten zu versehen. Eine mehrere Dichtkanten aufweisende Dichtlippe, bewirkt eine gestufte, optimierte Abdichtung. Dazu bietet es sich an, die jeweilige Dichtlippe so auszubilden, dass sich die Dichtkanten mit unterschiedlichen Kräften abstützen. Diese Maßnahme ermöglicht, dass die mit geringerer Stützkraft ausgelegte Dichtkante die Funktion einer Vordichtung übernimmt, die das Eindringen von Verunreinigungen oder größeren Partikeln in die nachgeschaltete, von der Dichtkante und der Anlagefläche definierten Dichtzone unterbindet und damit die Abdichtqualität verbessert. Alternativ schließt die Erfindung ein, die Vordichtung so anzuordnen, dass diese unter Einhaltung eines Spaltmaßes bis an die zugehörige Anlagefläche erstreckt. Das Spaltmaß ist dabei so ausgelegt bzw. so definiert, dass die Vorlippe das Eindringen von Schmierfett in das Spaltmaß unterbindet, dagegen einen Öleintritt ermöglicht, zur Bildung eines für die Lebensdauer der schleifend angeordneten Dichtlippe erforderlichen Schmierfilms. Dieser Aufbau eignet sich beispielsweise für stark beanspruchte, mit hohen Drehzahlen umlaufende Wellen und damit Wälzlager, für die als Schmierstoff ein Schmierfett vorgesehen ist, wodurch der spezielle Dichtlippenaufbau, bestehend aus einer schleifenden und einer nicht schleifenden Dichtkante, dem verwendeten Schmierstoff das Öl zur Beaufschlagung der schleifenden Dichtlippe entzogen werden kann.

Die erfindungsgemäße Auslegung der Wellenlippendichtung bezieht sich weiterhin auf die Gestaltung des Federmittels, das die kraftschlüssige Abstützung der radialen Dichtlippe unterstützt. Als Federmittel ist bevorzugt eine Schlauchfeder vorgesehen, deren Durchmesser "d" ≦ 1,1 mm beträgt. Dieser geringe Durchmesser ermöglicht eine bauraumoptimierte ausgelegte Schlauchfeder, und folglich die Auslegung der erfindungsgemäßen axialen Dichtlippe nicht beeinflusst. Gleichzeitig stellt sich durch den optimierten Durchmesser der Schlauchfeder eine geringe Federmasse ein, was sich insbesondere für Einbausituationen positiv erweist, bei denen die radiale Dichtlippe an einer Welle abgestützt ist, die mit einer hohen Drehzahl umläuft, wodurch aufgrund der geringen Federmasse ein Aufschwingen und damit nachteiliges Abheben der Dichtlippe von der Mantelfläche der Welle unterbleibt.

Alternativ zu einer Schlauchfeder schließt die Erfindung weiterhin als Federmittel einen radial vorgespannten, geschlitzten Sprengring ein. Dazu eignet sich insbesondere ein Sprengring mit einem Rechteckprofil, welches im eingebauten Zustand radial zur Mantelfläche der Welle ausgerichtet, lediglich einen geringen axialen Bauraum im Bereich der Dichtkante der radialen Dichtlippe benötigt.

Als geeigneter Werkstoff für das elastische Material der erfindungsgemäßen Wellenlippendichtung ist ein Elastomer, insbesondere HNBR vorgesehen. Als Elastomer eignet sich außerdem ein hitzebeständiger Fluorkautschuk, wie beispielsweise FPM oder FKW. Unabhängig von den zuvor genannten Dichtwerkstoffen weisen diese eine Härte von ≦ 75 Shore A auf.

Die erfindungsgemäße Wellenlippendichtung eignet sich insbesondere zur Abdichtung eines Wälzlagers, das für eine Wasserpumpe einer Brennkraftmaschine bestimmt ist. Die erfindungsgemäße Dichtung hat dabei die Aufgabe, einen kreisringförmigen Bereich zwischen einem das Wälzlager außen umschließenden Lagerring und der Pumpenwelle wirksam abzudichten. Die in einer Nut des Lagerrings dichtend angeordnete Wellenlippendichtung stützt sich mit der Dichtkante einer radialen Dichtlippe an der Mantelfläche der Welle oder einem zylindrischen Abschnitt der auf der Welle angeordneten Schleuderhülse ab. Die weitere axial ausgerichtete Dichtlippe der erfindungsgemäßen Dichtung ist an einem radialen Schenkel der Schleuderhülse oder einer Anlagefläche der Welle schleifend abgestützt. Die einzelnen Merkmale des kennzeichnenden Teils von Anspruch 1, wie definierter Anstellwinkel der axialen Dichtlippe, vergrößerte Länge der axialen Dichtlippe sowie einer konkreten Angabe einer axialen Überdeckung, die das Maß der ungespannten, spannungslosen Dichtlippe im Vergleich zur Einbaulage definiert, eignen sich bevorzugt für die Anwendung in einer Wasserpumpe.

**Kurze Beschreibung der Zeichnungen**

In den Zeichnungen sind unterschiedliche Ausführungsbeispiele der Erfindung dargestellt, die nachfolgend näher beschrieben sind. Es zeigen:

Figur 1    in einem Halbschnitt den Aufbau einer erfindungsgemäßen Wellenlippendichtung;

Figur 1a    in einer vergrößerten Darstellung das Detail "A" gemäß Figur 1, das Gestaltungsmerkmale der axialen Dichtlippe im Endbereich verdeutlicht;

Figur 1b    die Ansicht "H" gemäß Figur 1a;

Figur 2    die Wellenlippendichtung gemäß Figur 1, bei der die axiale Dichtlippe einen abgewinkelten Endabschnitt aufweist, wobei in einem Übergang zwischen den einzelnen Abschnitten innenseitig eine Hohlkehle vorgesehen ist;

Figur 2a    die Wellendichtung gemäß Figur 2, wobei die axiale Dichtlippe keine Hohlkehle aufweist;

Figur 3    die Dichtung gemäß Figur 2, mit einer außenseitig angeordneten Hohlkehle;

Figur 4    eine erfindungsgemäße Wellenlippendichtung, deren axiale Lippe einen endseitig nach außen abgewinkelten Abschnitt bildet;

Figur 5    in einem eingebauten Zustand eine erfindungsgemäße Wellenlippendichtung, die mit einer auf einer Welle lagefixierten Schleuderhülse zusammenwirkt;

Figur 6    eine Alternative zu Figur 5, bei der eine erfindungsgemäße Wellenlippendichtung mit zwei radialen Dichtlippen an der Mantelfläche einer Welle und über eine axiale Dichtlippe an einer mit der Welle verbundenen Schleuderscheibe abgestützt ist;

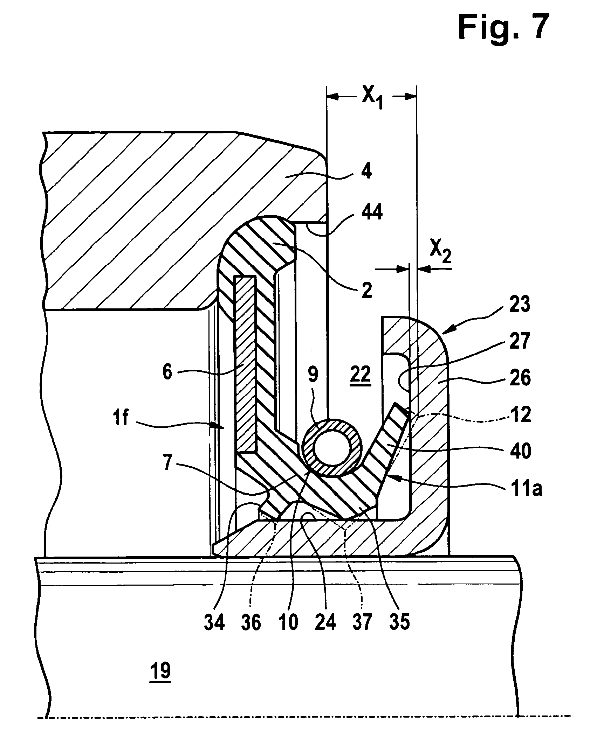

Figur 7    eine Dichtung, die in einer zylindrischen Aufnahme des Lagerrings eingesetzt ist;

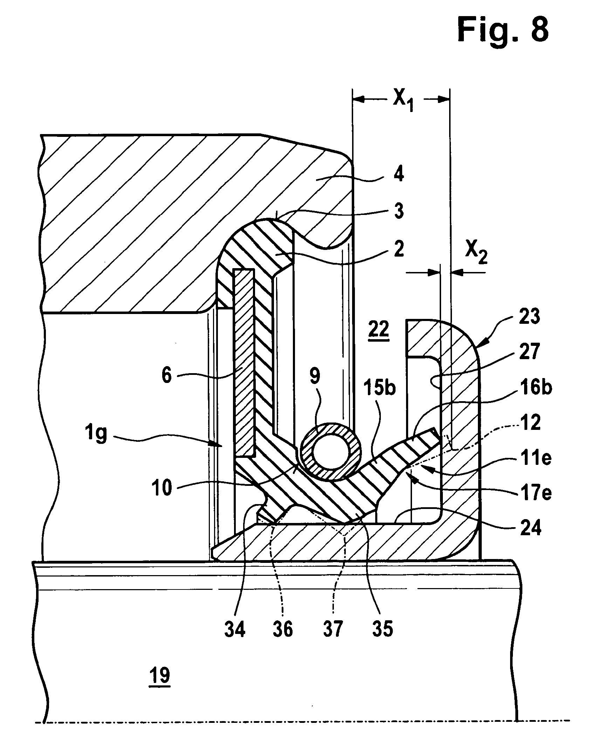

Figur 8    eine der Dichtung gemäß Figur 6 vergleichbare Dichtung, die mit einer Schleuderhülse zusammenwirkt.

**Detaillierte Beschreibung der Zeichnungen**

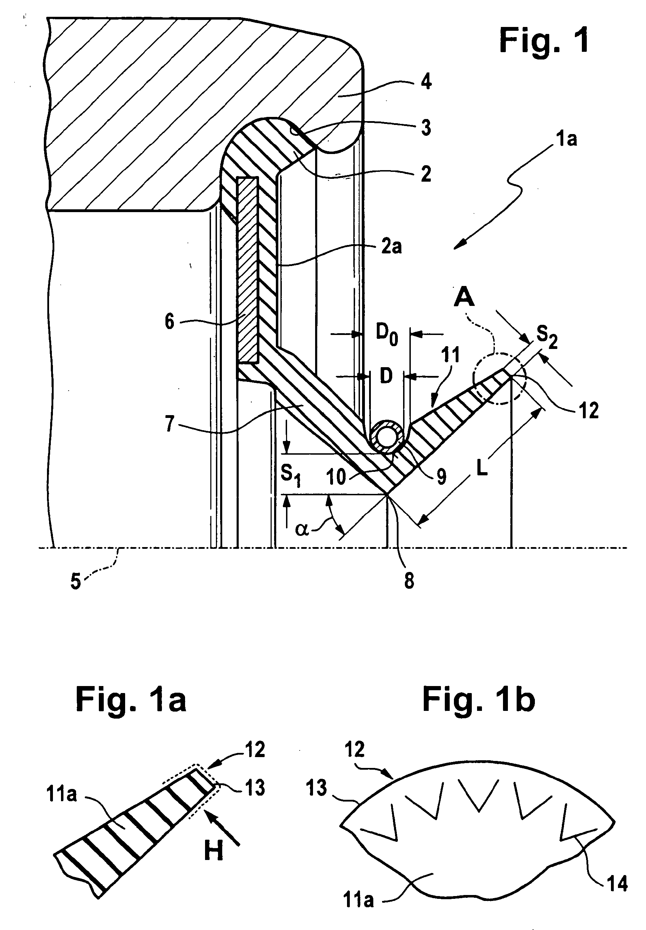

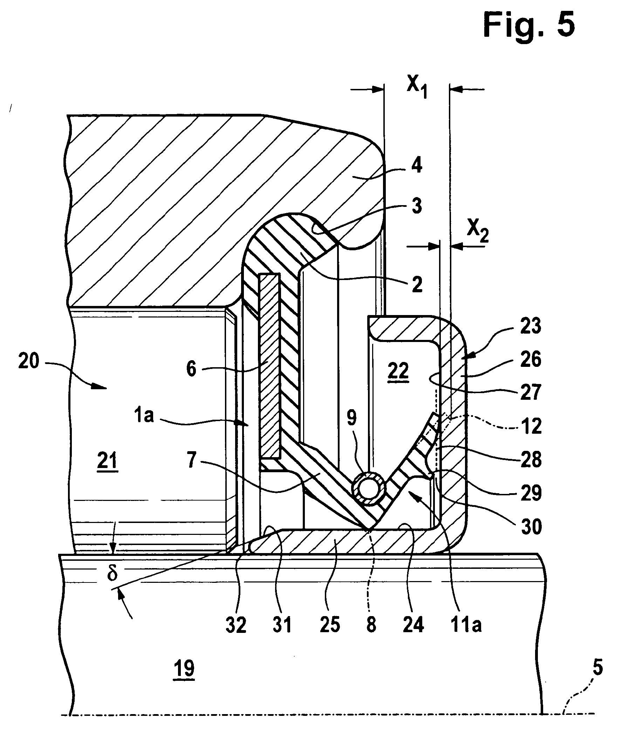

Die Figur 1 zeigt eine als Wellenlippendichtung gestaltete Dichtung 1 a in einem Halbschnitt. Die aus einem elastischen Material, vorzugsweise einem Elastomer hergestellte Dichtung 1 a ist mit einer Wulst 2 kraft- und formschlüssig in eine Nut 3 eines Lagerrings 4 lagepositioniert. In Richtung einer Symmetrieachse 5 bildet die Dichtung 1 a einen radialen Abschnitt, der zur Versteifung eine scheibenartig ausgelegte Armierung 6 umfasst. Dabei ist die Armierung 6 zumindest einseitig von dem elastischen Werkstoff der Dichtung 1 a abgedeckt. Im Bereich einer Innenkontur der Armierung 6 bildet die Dichtung 1 a eine seitlich versetzte, in Richtung der Symmetrieachse 5 geneigte radiale Dichtlippe 7, deren Dichtkante 8 im eingebauten Zustand der Dichtung 1 a dichtend an einer Mantelfläche, vorzugsweise einer rotierenden Welle, abgestützt ist. Der Dichtkante 8 ist als Federmittel eine Schlauchfeder 9 zugeordnet, die in eine Ringnut 10 der Dichtlippe 7 eingesetzt, die radiale Abstützkraft der Dichtlippe 7 erhöht. An die radiale Dichtlippe 7 schließt sich eine axiale Dichtlippe 11a an, die in einem Anstellwinkel "α" zur Symmetrieachse 5 ausgerichtet ist. Das freie Ende der Dichtlippe 11 bildet die Dichtkante 12, die in einer Einbaulage dichtend an einer Anlagefläche, einem Wellenabsatz oder einem separaten mit der Welle umlaufenden Bauteil dichtend abgestützt ist.
Die Dichtung 1 a schließt verschiedene Maßnahmen ein, die Elastizität insbesondere der axialen Dichtlippe 11a zu verbessern. Dazu ist insbesondere zur Symmetrieachse 5 in einem Anstellwinkel "α" eine definierte Lage der Dichtlippe 11a vorgesehen, die in einem Antellwinkel "α" $\geq$ 35° ausgerichtet ist. Weiterhin erstreckt sich die axiale Dichtlippe 11a über eine Länge "L" von $\geq$ 1,4 mm. Dabei verjüngt sich die Dichtlippe 11a kontinuierlich ausgehend von einem Mass "S1" $\geq$ 0,8 mm zwischen dem Innenumfang der Schlauchfeder 11 und der Dichtkante 8 auf die Wandstärke "S2" $\geq$ 0,2 mm am freien Ende der Dichtlippe 11a. Als ergänzende Maßnahme, die Elastizität der axialen Dichtlippe 11a zu verbessern, ist weiterhin eine bauraumoptimierte Schlauchfeder 9 bzw. Wurmfeder vorgesehen, deren Durchmesser "D" $\leq$ 1,3 mm beträgt. Die Schlauchfeder 9 ist in eine Ringnut 10 eingesetzt, deren "Maß ""$D_o$" das Durchmessermaß "D" übertrifft. Diese zuvor genannten konstruktiven Maßnahmen in Verbindung eines relativ weichen Dichtungswerkstoffes, beispielsweise einem Elastomer wie HNBR von $\leq$ 75 Shore A, ermöglicht eine definierte, engtolerierte axiale Überdeckung zwischen der axialen Dichtlippe 11a und einer zugehörigen Anlagefläche, wie in Figur 5 näher erläutert.
Die Figur 1 a zeigt in einem vergrößerten Maßstab das Detail "A", das freie Ende der axialen Dichtlippe 11a. Danach ist zumindest eine Stirnfläche 13 der Dichtkante 12 strukturiert, wodurch sich die Kontaktfläche der Dichtkante 12 verringert, verbunden mit einer reduzierten Wärmeeinleitung von der Anlagefläche in die Dichtlippe 11 a, was sich vorteilhaft auf den Verschleiß bzw. die Lebensdauer der Dichtung 1 a auswirkt. Alternativ oder zusätzlich zu einer strukturierten Stirnfläche 13 bzw. der gesamten Dichtkante 12 bietet es sich an, diesen Bereich mit einer reibungsmindernden Beschichtung zu versehen. Dazu eignet sich beispielsweise eine PTFE-Beschichtung.
In Figur 1 b ist die Ansicht "H" gemäß Figur 1 a dargestellt und verdeutlicht einer auf der Innenseite der axialen Dichtlippe 11a angebrachte Struktur 14, ausgebildet als ein Wechseldrall. Diese als V-förmig gestaltete Struktur 14 verbessert die Abdichtqualität der axialen Dichtlippe 11a, indem ein Schmierstoff, der sich an die Innenseite der axialen Dichtlippe 11a ansammelt, im eingebauten Zustand sich nicht ungehindert radial nach außen verlagern kann sondern eine Umlenkung erfährt.

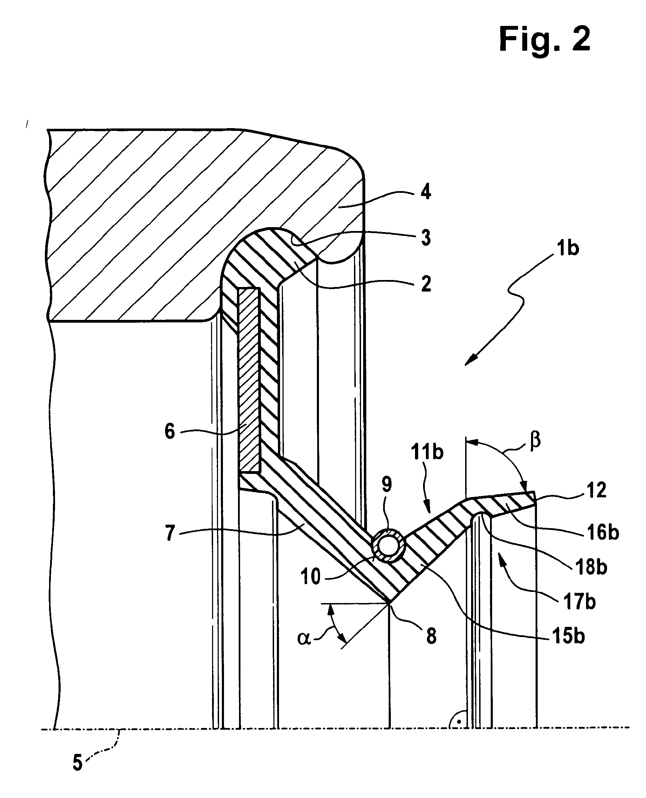

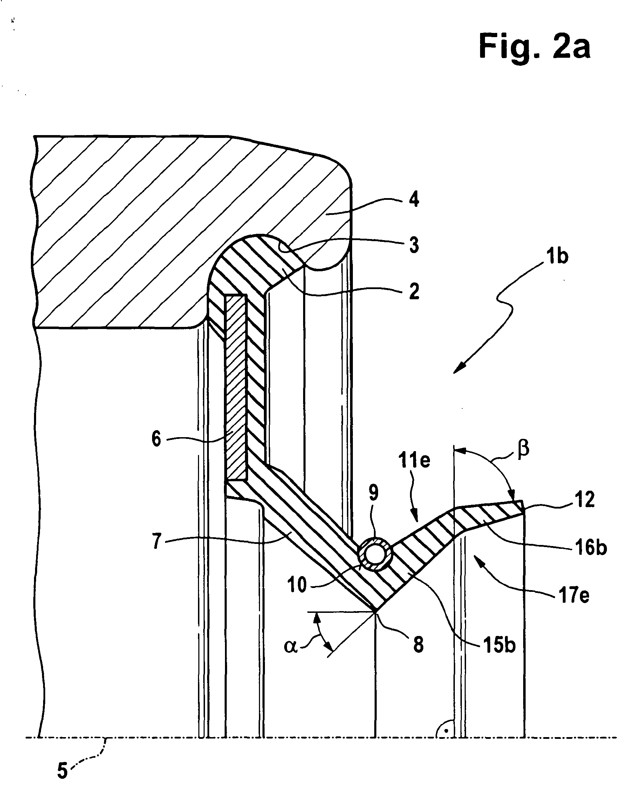

Die Figuren 2 bis 4 zeigen die Dichtungen 1b bis 1d, deren Aufbau weitestgehend mit der Dichtung 1 a gemäß Figur 1 übereinstimmt. Übereinstimmende Bauteile sind folglich mit gleichen Bezugsziffern versehen. Die nachfolgenden Beschreibungen beziehen sich daher insbesondere auf die Unterschiede zur Dichtung 1 a.
Die in Figur 2 dargestellte Dichtung 1b umfasst die axiale Dichtlippe 11 b, die Abschnitte 15b, 16b bildet. An den ersten Abschnitt 15b, welcher in dem Anstellwinkel "α" zur Symmetrieachse 5 verläuft, schließt sich ein abgewinkelter Abschnitt 16b an, welcher in einem Neigungswinkel "β" zur Symmetrieachse 5 geneigt ist. Zwischen den Abschnitten 15b, 16b bildet sich dabei ein Biegegelenk 17b. Das Biegegelenk 17b weist an der Innenseite, an der axialen Dichtlippe 11 b eine umlaufende Hohlkehle 18b auf, wodurch sich eine bewusste Materialverdünnung der Dichtlippe 11 b einstellt, die im eingebauten Zustand die Elastizität der Dichtlippe 11 b insbesondere die des abgewinkelten Abschnitts 16b verbessert.

In Figur 2a ist die Dichtung 1b mit einer zu der in Figur 2 alternativ gestalteten Dichtlippe 11 e abgebildet. Das Biegegelenk 17e umfasst keine Hohlkehle, alle übrigen Merkmale sind übereinstimmend.

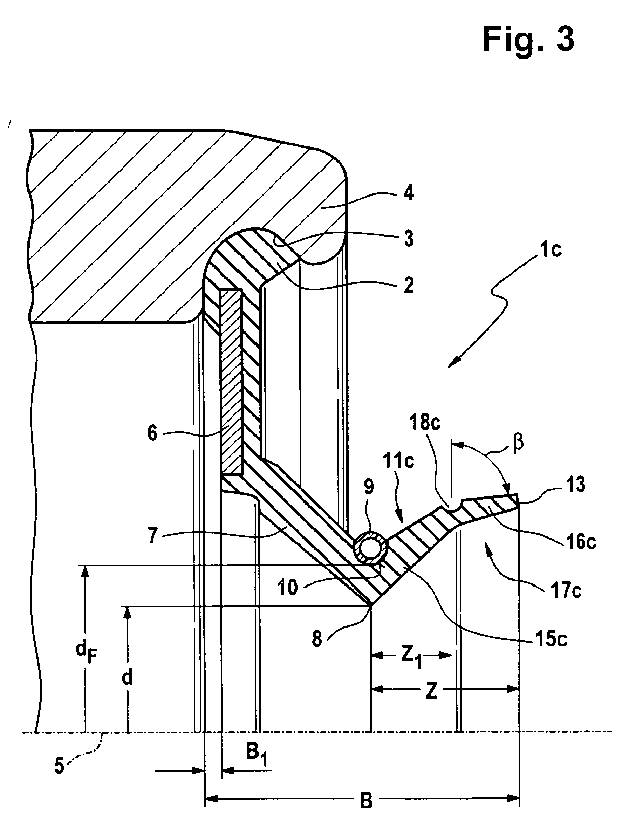

Die axiale Dichtlippe 11c der Dichtung 1c, gemäß Figur 3, umfasst die Abschnitte 15c, 16c zwischen denen das Biegegelenk 17c vorgesehen ist. Abweichend zu Figur 2 weist das Biegegelenk 17c eine auf der Außenseite der Dichtlippe 11c angeordnete, umlaufende Hohlkehle 18c auf. Das Biegegelenk 17c ist vorzugsweise so angeordnet, dass sich im nicht eingebauten, spannungslosen Zustand der Dichtung 1 c das Biegegelenk 17c in einem Abstand "$Z_1$" von der Dichtkante 8 der radialen Dichtlippe befindet, wobei der Abstand "$Z_1$" $\geqq$ 0,5 des Abstandes "Z" entspricht ist, das den axialen Abstand zwischen der Dichtkante 8 und der Stirnfläche 13 der axialen Dichtlippe 11c angibt. Zur Auslegung der Dichtung 1c beinhaltet die Figur 3 weitere Angaben. Der Innendurchmesser beträgt vorteilhaft "d" $\geqq$ 16 mm im spannungslosen Zustand der Dichtung 1c. Das Durchmessermaß "$d_s$", das den Innendurchmesser der Schlauchfeder 9 festlegt, beträgt $\geqq$ 17 mm. Das die Dichtungsbreite bestimmende Maß "B" beträgt $\geqq$ 3,2 mm. Ein Überstandsmaß "$b_1$" $\geqq$ 0,15 mm definiert den axialen Abstand zwischen der Armierung 6 und der Wulst 2.

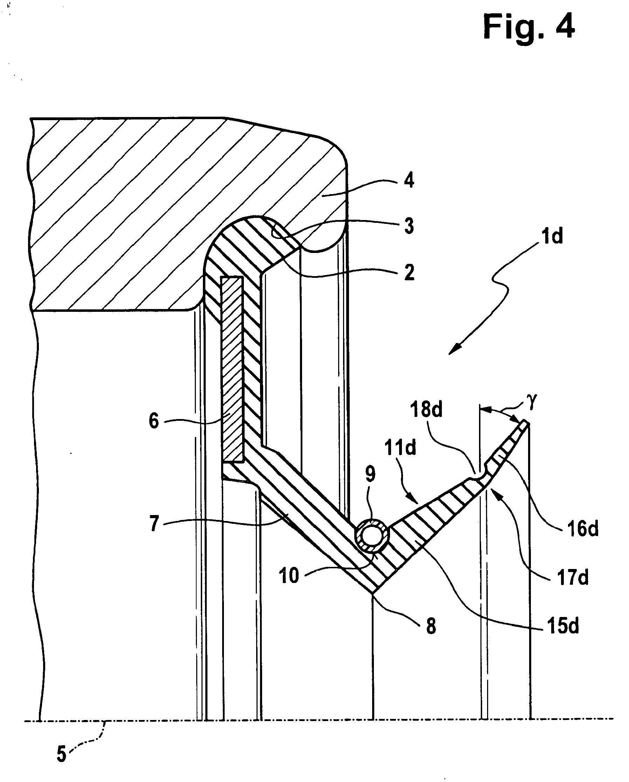

Die Figur 4 zeigt die Dichtung 1d, deren axiale Dichtlippe 11 d einen Endabschnitt 16d aufweist, der in einem Steigungswinkel "Y" von der Symmetrieachse 5 abgewandt ist. Das Biegegelenk 11 d der axialen Dichtlippe 11 d wird dabei durch eine auf der Außenseite der Dichtlippe 11 d vorgesehene umlaufende Hohlkehle 18d gebildet.

Die Figur 5 zeigt die Dichtung 1a im eingebauten Zustand, zur Abdichtung eines Ringspaltes, der sich zwischen dem Lagerring 4 und einer rotierenden Welle 19, insbesondere einer rotierenden Pumpenwelle einer Wasserpumpe, einstellt. Die Dichtung 1a trennt dabei zwei Druckräume, einen zur Aufnahme der Wälzkörper 21 bestimmten Ölraum 20 und einen Wasserraum 22, der vom Kühlmedium, insbesondere Kühlwasser einer Brennkraftmaschine beaufschlagt ist. Die Dichtlippen der Dichtung 1 a sind dabei einer Schleuderhülse 23 zugeordnet, die an der Welle 19 lagepositioniert ist und mit diesem Bauteil rotiert. Die Dichtkante 8 der radialen Dichtlippe 7 stützt sich dabei kraftschlüssig, unterstützt durch die Schlauchfeder 9 an der Mantelfläche 24 eines zylindrischen Abschnitts 25 der Schleuderhülse 23 ab.

Die zugehörige weitere axiale Dichtlippe 11 a der Dichtung 1a stützt sich an einem radialen, senkrecht zur Symmetrieachse 5 ausgerichteten Abschnitt 26 der Schleuderhülse 23 ab.

Zur Erzielung einer definierten axialen Überdeckung "$X_2$" zwischen der axialen Dichtlippe 11 a und der radialen Anlagefläche 27 des Abschnitts 26 der Schleuderhülse 23 ist eine definierte Einbaulage, gekennzeichnet durch das Maß "$X_1$" zwischen dem Lagerring 4 und der Schleuderhülse 23 vorgesehen. Die Festlegung der axialen Überdeckung "$X_2$" in Verbindung mit den konstruktiven Maßnahmen, die sich insbesondere auf die axiale Dichtlippe 11a beziehen, ermöglicht eine optimale Anlage der Dichtlippe 11a an der Schleuderhülse 23. Die sich daraus ergebende Abstützkraft der axialen Dichtlippe 11a bewirkt einerseits eine ausreichende Abdichtung und vermeidet andererseits eine zu starke Reibung verbunden mit einer unzulässig hohen Erwärmung, die sich nachteilig auf die Abdichtung und damit die Lebensdauer der gesamten Dichtung 1 a bzw. der mit in Verbindung stehenden Lagerung auswirkt. Als unterstützende Maßnahme insbesondere zur Vermeidung einer unzulässig hohen Erwärmung ist die Anlagefläche zumindest partiell im Bereich der Dichtlippenabstützung strukturiert. Dazu eignet sich beispielsweise eine Waffelung 28, die axial aus der Anlagefläche 27 vortretende Erhebungen aufweist, die alternativ auch axial in die Anlagefläche 27 eingebracht werden kann. Der sich dabei einstellende verkleinerte Kontaktbereich zwischen der axialen Dichtlippe 11a und der Anlagefläche 27 reduziert die Reibung und ermöglicht weiterhin den Einschluss von Schmierstoff bzw. einem Schmiermittel, das zum Aufbau eines Ölfilms bzw. eines Schmiermittelfilms zwischen der Anlagefläche 27 und der Dichtkante 12 der axialen Dichtlippe 11a erforderlich ist.

In Figur 5 ist die axiale Dichtlippe 11a innenseitig, d. h. in Richtung der Welle 19 zeigend, mit einer Vorlippe 29 versehen, die im eingebauten Zustand unter Einhaltung eines Ringspaltes 30 bis an die Anlagefläche 27 der Schleuderhülse 23 geführt ist. Die Vorlippe 29 bzw. der Dichtspalt 30 sind so gestaltet bzw. ausgelegt, dass dieser den Durchtritt von Öl ermöglicht, dagegen Schmierfett zurückhält. Diese Maßnahme nimmt ebenfalls Einfluss auf die Abdichtqualität, indem sichergestellt ist, dass die Abstützfläche der Dichtkante 12 einen ausreichenden Ölfilm aufbauen kann, dagegen eine unzulässig hohe Schmierstoffbelastung der Dichtkante 12 entfällt. Für die Montage der Dichtung 1 a und die Schleuderhülse 23 ist vorzugsweise ein sequentieller Einbau vorgesehen, bei dem zunächst die Dichtung 1 a in die Nut 3 eingesetzt wird, bevor die Schleuderhülse 23 axial zugeführt wird. Zur Vermeidung einer Beschädigung insbesondere der radialen Dichtlippe 7 ist dazu der zylindrische Abschnitt 25 der Schleuderhülse 23 mit einer Einführschräge 31 versehen. Die unter dem "δ" Winkel verlaufende Einführschräge 31 ist so gewählt, dass diese bei der Montage die radiale Dichtlippe 7 spreizt, damit sich diese zerstörungsfrei auf die Mantelfläche 24 verschieben kann. Zusätzlich zu der Einführschräge 31 bietet es sich an, den zylindrischen Abschnitt 25 der Schleuderhülse 23 an der Stirnseite mit einem Innenradius 32 zu versehen, der den Einbau der Schleuderhülse 23 auf die Welle 19 vereinfacht.

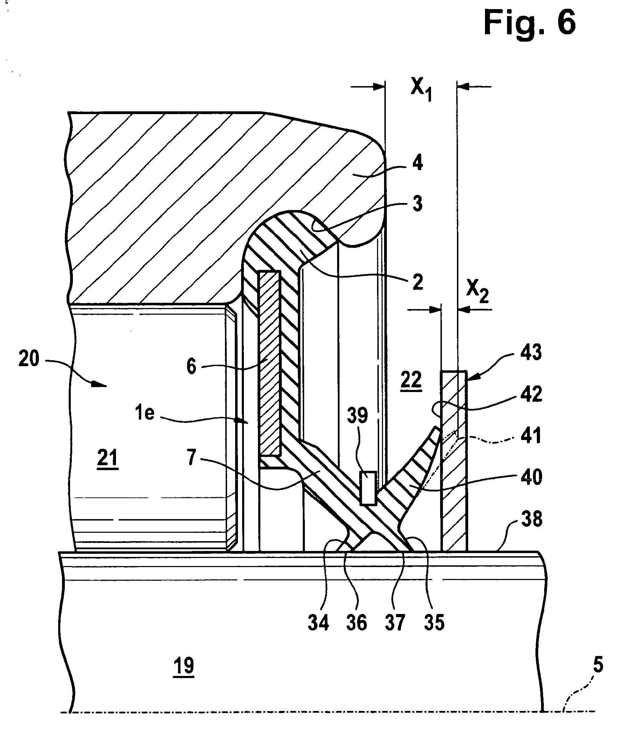

Die Dichtung 1e gemäß Figur 6 ist ebenfalls im eingebauten Zustand dargestellt. Die Dichtung 1e ist versehen mit zwei radialen Dichtlippen 34, 35, die axial beabstandet über Dichtkanten 36, 37 unmittelbar an der Mantelfläche 39 der Welle 19 abgestützt sind. Zur Verstärkung der Abstützkraft dient ein radial vorgespannter, geschlitzter Sprengring 39, der in eine Ringnut der Dichtung 1e eingesetzt ist. Die axiale Dichtlippe 40 ist über die Dichtkante 41 an der Anlagefläche 42 einer Schleuderscheibe 43 abgestützt. Dazu ist die Schleuderscheibe 43 so an der Welle 19 lagepositioniert, dass sich eine definierte axiale Überdeckung "$X_2$" zwischen der Dichtkante 41 der axialen Dichtlippe 40 und der Anlagefläche 42 einstellt, indem die Schleuderscheibe 43 in einem Abstand "$X_1$" zu dem Lagerring 4 auf der Welle 19 positioniert ist.

## Bezugszahlen

| | |
|---|---|
| 1 a | Dichtung |
| 1 b | Dichtung |
| 1 c | Dichtung |
| 1 d | Dichtung |
| 1 e | Dichtung |
| 1f | Dichtung |
| 1g | Dichtung |
| 2 | Wulst |
| 3 | Nut |
| 4 | Lagerring |
| 5 | Symmetrieachse |
| 6 | Armierung |
| 7 | Dichtlippe (radial) |
| 8 | Dichtkante |
| 9 | Schlauchfeder |
| 10 | Ringnut |
| 11a | Dichtlippe (axial) |
| 11 b | Dichtlippe (axial) |
| 11 c | Dichtlippe (axial) |
| 11d | Dichtlippe (axial) |
| 11e | Dichtlippe (axial) |
| 12 | Dichtkante |
| 13 | Stirnfläche |
| 14 | Struktur |
| 15b | Abschnitt |
| 15c | Abschnitt |
| 15d | Abschnitt |
| 16b | Abschnitt |
| 16c | Abschnitt |
| 16d | Abschnitt |
| 17b | Biegegelenk |
| 17c | Biegegelenk |
| 17d | Biegegelenk |
| 17e | Biegegelenk |
| 18b | Hohlkehle |
| 18c | Hohlkehle |
| 18d | Hohlkehle |
| 19 | Welle |
| 20 | Ölraum |
| 21 | Wälzkörper |
| 22 | Wasserraum |
| 23 | Schleuderhülse |
| 24 | Mantelfläche |
| 25 | Abschnitt (zylindrisch) |
| 26 | Abschnitt (radial) |
| 27 | Anlagefläche |
| 28 | Waffelung |
| 29 | Vorlippe |
| 30 | Ringspalt |
| 31 | Einführschräge |
| 32 | Innenradius |
| 33 | Schleuderscheibe |
| 34 | Dichtlippe (radial) |
| 35 | Dichtlippe (radial) |
| 36 | Dichtkante |
| 37 | Dichtkante |
| 38 | Mantelfläche |
| 39 | Sprengring |
| 40 | Dichtlippe (axial) |
| 41 | Dichtkante |
| 42 | Anlagefläche |
| 43 | Schleuderscheibe |
| 44 | Aufnahme |

## Patentansprüche

1. Dichtungsanordnung, die eine als Wellenlippendichtung ausgebildete Dichtung (1a bis 1e) umfasst, sowie einen Lagerring (4) mit einer Nut (3) und eine rotierende Welle (19), wobei die Wellenlippendichtung aus elastischem Material zur dichten Trennung von Druckräumen, insbesondere zwischen zwei relativ zueinander bewegte Bauteile, ingesetzt ist, und die in einer Nut (3) eingesetzte Dichtung (1a bis 1e) zumindest eine erste radiale Dichtlippe (7, 34, 35) aufweist, an die sich zumindest eine zweite axiale Dichtlippe (11a bis 11 d; 40) anschließt, dabei ist die radiale, zumindest eine Dichtkante (8, 36, 37) aufweisende Dichtlippe (7, 34, 35) von einem Federmittel unterstützt, an der in Richtung einer Symmetrieachse (5) der Dichtung (1a bis 1e) ausgerichteten Welle (19), abgestützt; und die axiale Dichtlippe (11 a bis 11 d; 40) in einer Einbaulage über zumindest eine Dichtkante (12, 41) an einer radial zu der Symmetrieachse (5) der Dichtung (1a bis 1e) ausgerichteten Anlagefläche (27, 42) abgestützt, wobei eine in einem radialen Abschnitt der Dichtung (1a bis 1d) integrierte Armierung (6) zumindest einseitig von dem elastischen Dichtungsmaterial umschlossen ist, **gekennzeichnet durch** die Kombination folgender Merkmale:

- die axiale Dichtlippe (11a bis 11 d; 40) ist in einem spannungslosen, nicht eingebauten Zustand der Dichtung (1a bis 1e), zu deren Symmetrieachse (5), in einem Anstellwinkel "$\alpha$" von $\leqq 35°$ ausgerichtet;
- ausgehend von der Dichtkante (8; 36, 37) der radialen Dichtlippe (7; 34, 35) erstreckt sich die axiale Dichtlippe (11a bis 11d; 40) im nicht eingebauten Zustand der Dichtung (1a bis 1 e) über eine Länge von $\geqq 1,4$ mm;
- in einer Einbaulage ist die axiale Dichtlippe (11a bis 11d; 40) mit einer axialen Überdeckung "$X_2$" von 0,05 bis 0,55 mm an der zugehörigen Dichtfläche bzw. Anlagefläche (27, 42) abgestützt;
- der Dichtungswerkstoff der Dichtung (1 a bis 1 e) weist eine Härte von $\leqq 75$ Shore A auf.

2. Dichtung nach Anspruch 1, wobei die axiale Dichtlippe (11b, 11c, 11d) in einem Abstandsmaß "$z_1$" beabstandet zur Dichtkante (8) der radialen Dichtlippe (7) einen abgewinkelten Abschnitt (16b, 16c, 16d) aufweist.

3. Dichtung nach Anspruch 2, wobei der abgewinkelte Abschnitt (16b, 16c) gegenüber der übrigen axialen Dichtlippe (11b, 11c) um einen Neigungswinkel "$\beta$" von $\geqq 60°$ bezogen zu einer rechtwinklig zu der Symmetrieachse (5) verlaufenden Schenkel ausgerichtet ist.

4. Dichtung nach Anspruch 2, wobei der endseitige Abschnitt (16d) der axialen Dichtlippe (11 d) um einen Steigungswinkel "y" von $\leqq 40°$ rechtwinkelig zu der Symmetrieachse (5) ausgerichteten Schenkel verläuft.

5. Dichtung nach Anspruch 1, deren axiale Dichtlippe (11a) einen Wandstärkenverlauf aufweist, der sich im spannungslosen Zustand der Dichtung (1a), ausgehend von der Dichtkante (8) der radialen Dichtlippe (7) von $\geqq 0,8$ mm auf $\geqq 0,2$ mm verjüngt.

6. Dichtung nach Anspruch 2, deren axiale Dichtlippe (11b,11c, 11d) im Bereich einer Abwinkelung, einem Übergang zwischen dem Anstellwinkel "$\alpha$" einerseits und dem Neigungswinkel "$\beta$" bzw. dem Steigungswinkel "$\gamma$" anderseits, ein Biegegelenk (17b, 17c, 17d) bildet.

7. Dichtung nach Anspruch 6, wobei das Biegegelenk (17b) eine auf der Innenseite der axialen Dichtlippe (11b) in Richtung der Symmetrieachse (5) zeigende Hohlkehle (18b) aufweist, und die Biegegelenke (17c, 17d) eine auf der Außenseite der Dichtlippe (11c, 11d) angeordnete Hohlkehle (18c, 18d) aufweisen.

8. Dichtung nach Anspruch 6, wobei das Biegegelenk (17b, 17c, 17d) weder eine Materialeinschürung noch eine Hohlkehle aufweist.

9. Dichtung nach Anspruch 6, wobei die Hohlkehle (18b) als ein Schmierstoffreservoir vorgesehen ist.

10. Dichtung nach Anspruch 1, bei der die Dichtkante (12) der axialen Dichtlippe (11a) der Dichtung (1a) an einer strukturierten, insbesondere eine Waffelung (28) aufweisenden Anlagefläche (28) abgestützt ist.

11. Dichtung nach Anspruch 1, bei der die axiale Dichtlippe (11a) mittels einer strukturierten Stirnfläche (13) und/oder einer strukturierten Dichtkante (12) an einer ebenen oder einer strukturierten Anlagefläche (27) abgestützt ist.

12. Dichtung nach Anspruch 1, wobei die Dichtkante (12) der axialen Dichtlippe (11a) endseitig eine reibungsmindernde, insbesondere eine PTFE- Beschichtung aufweist.

13. Dichtung nach Anspruch 1, bei der die Dichtkante (12) der axialen Dichtlippe (11a) an einer zumindest lokal bzw. partiell reibungsmindemd beschichteten Anlagefläche (27, 42) abgestützt ist.

14. Dichtung nach Anspruch 1, wobei die Dichtlippe (11a) innenseitig auf der zur Anlagefläche (27) bzw. in Richtung der Symmetrieachse (5) zeigend eine Struktur (14) aufweist, die insbesondere als Wechseldrall gestaltet ist.

15. Dichtung nach Anspruch 1, wobei die axiale Dichtlippe (11 a, 40) der Dichtung (1a, 1e) mit einer rotierenden Schleuderhülse (23) oder mit einer rotierenden Schleuderscheibe (43) zusammenwirkt.

16. Dichtung nach Anspruch 15, wobei die Schleuderhülse (23) und die Schleuderscheibe (43) an der rotierenden Welle (19) lagefixiert sind.

17. Dichtung nach Anspruch 15, deren Schleuderhülse (23) mit einem zylindrischen Abschnitt (25) die Welle (19) umschließt und deren radialer Bord einen Abschnitt (26) bildet, an dessen Anlagefläche (27) die axiale Dichtlippe (11a) der Dichtung (1a) abgestützt ist.

18. Dichtung nach Anspruch 15, wobei der zylindrische Abschnitt (25) der Schleuderhülse stimseitig an einer Mantelfläche (24) eine Einführschräge (31) aufweist, die eine sequenzielle Montage der Bauteile Dichtung (1a) und Schleuderhülse (23) ermöglicht.

**19.** Dichtung nach Anspruch 1, wobei die radiale Dichtlippe und/oder die axiale Dichtlippe zwei oder mehr Dichtkanten (36 oder 37) aufweisen.

**20.** Dichtung nach Anspruch 1, wobei die axiale Dichtlippe (11a) der Dichtung (1a) eine Vorlippe (29) einschließt, die sich in der Einbaulage der Dichtung (1a) bis auf ein Spaltmaß (30) an die Anlagefläche (27) erstreckt.

**21.** Dichtung nach Anspruch 1, die als Federmittel eine die radiale Dichtlippe (1a) umschließende Schlauchfeder (9) mit dem Durchmesser (D) umfasst, die in eine das Maß ($D_o$) aufweisende Ringnut (10) der Dichtung (1a) eingesetzt ist, wobei das Durchmesserverhältnis $\dfrac{D_o}{D} \geq 1{,}1$ beträgt.

**22.** Dichtung nach Anspruch 21 deren Schlauchfeder (9) einen Durchmesser "D" von $\leq 1{,}3$mm aufweist.

**23.** Dichtung nach Anspruch 1, die als Federmittel einen radial vorgespannten, geschlitzten Sprengring (39) umfasst, der die radiale Dichtlippe (34, 35) umschließt.

**24.** Dichtung nach Anspruch 1, für die als Werkstoff ein Elastomer, insbesondere HNBR vorgesehen ist.

**25.** Dichtung nach Anspruch 1, für die als Werkstoff ein Fluorkautschuk wie FPM oder FKW vorgesehen ist.

**26.** Dichtung nach Anspruch 1, die zur Abdichtung für ein in einer Wasserpumpe einer Brennkraftmaschine bestimmtes Wälzlager vorgesehen ist, bei dem die in einer Nut (3) oder einer zylindrischen Aufnahme (44) des Lagerrings (4) eingesetzte Dichtung (1a, 1e) mit der Dichtkante (8, 36, 37) der radialen Dichtlippe (7, 34, 35) unmittelbar an der Welle (19) oder dem zylindrischen Abschnitt (25) der Schleuderhülse (23) und die Dichtkante (12, 41) der axialen Dichtlippe (11a, 40) der Dichtung (1a,1e) an der radial ausgerichteten Anlagefläche (27, 42) der Schleuderhülse (23) bzw. der Schleuderscheibe (43) abgestützt ist.

**Claims**

**1.** Sealing arrangement, which comprises a seal (1a to 1e) in the form of a lip-type shaft seal, and a bearing ring (4) with a groove (3) and a rotating shaft (19), the lip-type shaft seal of elastic material being inserted, in particular, between two components moveable relative to one another for the impermeable separation of pressure chambers, and the seal (1a to 1e) inserted into a groove (3) having at least a first radial sealing lip (7, 34, 35), adjoining which is at least a second axial sealing lip (11a to 11d; 40), whilst the radial sealing lip (7, 34, 35) having at least one sealing edge (8, 36, 37) is supported by a spring means on the shaft (19) aligned in the direction of an axis of symmetry (5) of the seal (1a to 1e), and the axial sealing lip (11a to 11d; 40), in a fitted position is supported by way of at least one sealing edge (12, 41) on a seating face (27, 42) aligned radially to the axis of symmetry (5) of the seal (1a to 1e), a reinforcement (6) integrated in a radial section of the seal (1a to 1d) being enclosed, at least on one side, by the elastic sealing material, **characterized by** the combination of the following features:

> - when the seal (1a to 1e) is not in the fitted state and is not under tension, the axial sealing lip (11a to 11d; 40) is aligned at an angle of incidence "$\alpha$" of $\leq 35$ ° to the axis of symmetry (5) thereof;
> - proceeding from the sealing edge (8; 36, 37) of the radial sealing lip (7; 34, 35) the axial sealing lip (11a to 11d; 40) extends over a length of $\geq 1.4$ mm when the seal (1a to 1e) is not in the fitted state;
> - in a fitted position the axial sealing lip (11a to 11d; 40) is supported with an axial overlap "$X_2$" of 0.05 to 0.55 mm on the associated sealing face or seating face (27, 42)
> - the seal material of the seal (1a to 1e) has a Shore A hardness of $\leq 75$.

**2.** Seal according to Claim 1, **characterized in that** the axial sealing lip (11b, 11c, 11d) has an angled section (16b, 16c, 16d) spaced at an interval "$z_1$" from the sealing edge (8) of the radial sealing lip (7).

**3.** Seal according to Claim 2, **characterized in that** the angled section (16b, 16c), in contrast to the rest of the axial sealing lip (11b, 11c), is oriented by an angle of inclination "$\beta$" of $\geq 60°$ in relation to a line running at right angles to the axis of symmetry (5).

**4.** Seal according to Claim 2, **characterized in that** the end section (16d) of the axial sealing lip (11d) runs at an angle of ascent "$\gamma$" of $\leq 40°$ to a line oriented at right angles to the axis of symmetry (5).

**5.** Seal according to Claim 1, **characterized in that** the axial sealing lip (11a) thereof has a wall thickness which when the seal (1a) is not in a tensioned state tapers from $\geq 0.8$ mm to $\geq 0.2$ mm away from the sealing edge (8) of the radial sealing lip (7).

**6.** Seal according to Claim 2, **characterized in that** in the area of an angled portion forming a transition between the angle of incidence "$\alpha$" on the one hand and the angle of inclination "β" or the angle of ascent "γ" on the other, the axial sealing lip (11b, 11c, 11d) of said seal forms a bending joint (17b, 17c, 17d).

7. Seal according to Claim 6, **characterized in that** the bending joint (17b) has a flute (18b) on the inside of the axial sealing lip (11b) pointing in the direction of the axis of symmetry (5), and the bending joints (17c, 17d) have a flute (18c, 18d) arranged on the outside of the sealing lip (11c, 11d).

8. Seal according to Claim 6, **characterized in that** the bending joint (17b, 17c, 17d) has neither a material constriction nor a flute.

9. Seal according to Claim 6, **characterized in that** the flute (18b) is provided as a lubricant reservoir.

10. Seal according to Claim 1, **characterized in that** the sealing edge (12) of the axial sealing lip (11a) of the seal (1a) is supported on a textured seating face (28) especially one having a honeycomb structure (28).

11. Seal according to Claim 1, **characterized in that** the axial sealing lip (11a) is supported on a plane or a textured seating face (27) by means of a textured end face (13) and/or a textured sealing edge (12).

12. Seal according to Claim 1, **characterized in that** the sealing edge (12) of the axial sealing lip (11a) has a friction-reducing coating, in particular a PTFE coating, at the end.

13. Seal according to Claim 1, **characterized in that** the sealing edge (12) of the axial sealing lip (11a) is supported on a coated seating face (27, 42) serving to reduce friction at least locally or partially.

14. Seal according to Claim 1, **characterized in that** the sealing lip (11a), on the inside on the [lacunae] pointing towards the seating face (27) or in the direction of the axis of symmetry (5), has a texture (14) which is in particular designed as an alternating twist.

15. Seal according to Claim 1, **characterized in that** the axial sealing lip (11a, 40) of the seal (1a, 1e) interacts with a rotating centrifugal sleeve (23) or with a rotating centrifugal disc (43).

16. Seal according to Claim 15, **characterized in that** the centrifugal sleeve (23) and the centrifugal disc (43) are securely fixed to the rotating shaft (19).

17. Seal according to Claim 15, **characterized in that** the centrifugal sleeve (23) with a cylindrical section (25) encloses the shaft (19) and the radial edge thereof forms a section (26), on the seating face (27) of which the axial sealing lip (11a) of the seal (1a) is supported.

18. Seal according to Claim 15, **characterized in that** on a circumferential surface (24) at the end the cylindrical section (25) of the centrifugal sleeve has an insertion bevel (31), which permits a sequential assembly of the seal (1a) and centrifugal sleeve (23) components.

19. Seal according to Claim 1, **characterized in that** the radial sealing lip and/or the axial sealing lip has/ have two or more sealing edges (36 or 37).

20. Seal according to Claim 1, **characterized in that** the axial sealing lip (11a) of the seal (1a) includes a pilot lip (29), which when the seal (1a) is in the fitted position extends up to the seating face (27), save for a gap (30).

21. Seal according to Claim 1, **characterized in that** as spring means it comprises a hose spring (9) of diameter (D), which encloses the radial sealing lip (1a) and which is inserted into an annular groove (10) of dimension $(D_0)$ in the seal (1a), the ratio between the diameters being $D_0/D \geq 1,1$.

22. Seal according to Claim 21, **characterized in that** the hose spring (9) has a diameter "D" of $\leq 1.3$ mm.

23. Seal according to Claim 1, **characterized in that** as spring means it comprises a radially pretensioned, split retaining ring (39), which encloses the radial sealing lip (34, 35).

24. Seal according to Claim 1, **characterized in that** it is made from an elastomer material, in particular HNBR.

25. Seal according to Claim 1, **characterized in that** it is made from a fluorocarbon rubber such as FPM or FKW.

26. Seal according to Claim 1, which is intended for sealing a roller bearing, which is destined for use in a water pump of an internal combustion engine, **characterized in that** the seal (1a, 1e) inserted in a groove (3) or a cylindrical seat (44) of the bearing ring (4) is supported with the sealing edge (8, 36, 37) of the radial sealing lip (7, 34, 35) directly on the shaft (19) or the cylindrical section (25) of the centrifugal sleeve (23) and the sealing edge (12, 41) of the axial sealing lip (11a, 40) of the seal (1a, 1e) on the radially oriented seating face (27, 42) of the centrifugal sleeve (23) or the centrifugal disc (43).

**Revendications**

1. Dispositif de joint d'étanchêité, qui comprend un (1a à 1e) joint d'étanchéité conçu comme un joint à lèvres pour arbre, ainsi qu'une bague de roulement (4) comportant une rainure (3) et un arbre rotatif (19), moyennant quoi le joint à lèvres pour arbre en matériau élastique est utilisé pour séparer de manière étanche des espaces pressurisés, notamment entre deux composants déplacés relativement l'un à l'autre et le joint d'étanchéité (1a à 1e) inséré dans une rainure (3) présente au moins une première lèvre d'étanchéité radiale (7,34,35), à laquelle au moins une deuxième lèvre d'étanchéité axiale (11a à 11d ; 40) est contiguë, la lèvre d'étanchéité (7,34,35) radiale, présentant au moins une arête d'étanchéité (8,36,37) étant ainsi soutenue par un moyen de ressort, sur lequel un arbre (19) orienté dans le sens de l'axe de symétrie (5) du joint d'étanchéité (1a à 1e) est appuyé et la lèvre d'étanchéité axiale (11a à 11d ; 40) est appuyée à une position de montage par au moins une arête d'étanchéité (12,41) sur une surface d'appui (27,42) orientée radialement par rapport à l'axe de symétrie (5) du joint d'étanchéité (1a à 1e) et moyennant quoi une armature (6) intégrée à une portion radiale du joint d'étanchéité (1a à 1d) est enclose au moins d'un côté par le matériau d'étanchéité élastique, **caractérisé par** la combinaison des caractéristiques suivantes :

   - la lèvre d'étanchéité axiale (11a à 11d; 40) est orientée dans un état non tensionné, non posé du joint d'étanchéité (1a à 1e) par rapport à son axe de symétrie (5) d'un angle d'attaque « $\alpha$ » $\leq 35°$ ;
   - en partant de l'arête d'étanchéité (8 ;36,37) de la lèvre d'étanchéitê radiale (7 ;34,35), la lèvre d'étanchéité axiale (11a à 11d; 40) s'étend à l'état non posé du joint d'étanchéité (1a à 1e) sur une longueur $\geq 1,4$ mm;
   - dans une position de pose, la lèvre d'étanchéité axiale (11a à 11d ; 40) s'appuie par un recouvrement axial « $X_2$ » de 0,05 à 0,55 mm sur la surface d'étanchéité, respectivement surface d'appui (27,42) correspondante ;
   - le matériau d'étanchéité du joint d'étanchéité (1a à 1e) présente une dureté $\leq 75$ shore A.

2. Joint d'étanchéité selon la revendication 1, dans lequel la lèvre d'étanchéité axiale (11b, 11c, 11d) présente une portion coudée (16b, 16c, 16d) espacée d'une distance « $Z_1$ » par rapport à l'arête d'étanchéité (8) de la lèvre d'étanchéité radiale (7).

3. Joint d'étanchéité selon la revendication 2, dans lequel la portion coudée (16b, 16c) est orientée vis-à-vis du reste de la lèvre d'étanchéité axiale (11b, 11c) d'un angle d'inclinaison « $\beta$ » $\geq 60°$ par rapport à un pan s'étendant à angle droit de l'axe de symétrie (5).

4. Joint d'étanchéité selon la revendication 2, dans lequel la portion d'extrémité (16d) de la lèvre d'étanchéité axiale (11d) s'étend d'un angle d'élévation « Y » de $\leq 40°$ à angle droit du pan orienté par rapport à l'axe de symétrie (5).

5. Joint d'étanchéité selon la revendication 1, dont la lèvre d'étanchéité axiale (11a) présente un cours d'épaisseur de paroi, qui s'amincit de $\geq 0,8$ mm à $\geq 0,2$ mm à l'état non tensionné du joint d'étanchéité (1a) à partir de l'arête d'étanchéité (8) de la lèvre d'étanchéité radiale (7).

6. Joint d'étanchéité selon la revendication 2, dont la lèvre d'étanchéité axiale (11b, 11c, 11d) forme un joint articulé de flexion (17b, 17c, 17d) au niveau d'un coudage, une transition entre l'angle d'attaque « $\alpha$ » d'une part et l'angle d'inclinaison « $\beta$ », respectivement l'angle d'élévation « Y » d'autre part.

7. Joint d'étanchéité selon la revendication 6, dans lequel le joint articulé de flexion (17b) présente une gorge creuse (18b) façonnée dans la direction du côté interne de la lèvre d'étanchéité axiale (11b) dans le sens de l'axe de symétrie (5) et les joints articulés de flexion (17c, 17d) présentent une gorge creuse (18c, 18d) disposée sur le côté externe de la lèvre d'étanchéité (11c, 11d).

8. Joint d'étanchéité selon la revendication 6, dans lequel le joint articulé de flexion (17b, 17c, 17d) ne présente ni un rétrécissement du matériau, ni une gorge creuse.

9. Joint d'étanchéité selon la revendication 6, dans lequel la gorge creuse (18b) est pourvue d'un réservoir de lubrifiant.

10. Joint d'étanchéité selon la revendication 1, dans lequel l'arête d'étanchéité (12) de la lèvre d'étanchéité axiale (11a) du joint d'étanchéité (1a) est appuyée sur une surface d'appui (28) structurée, présentant notamment une gaufrure (28).

11. Joint d'étanchéité selon la revendication 1, dans lequel la lèvre d'étanchéité axiale (11a) est appuyée au moyen d'une surface frontale structurée (13) et/ou d'une arête d'étanchéité structurée (12) sur une surface d'appui (27) plane ou structurée.

12. Joint d'étanchéité selon la revendication 1, dans lequel l'arête d'étanchéité (12) de la lèvre d'étanchéité axiale (11a) présente à son extrémité un revêtement limitant la friction, notamment de PTFE.

13. Joint d'étanchéité selon la revendication 1, dans lequel l'arête d'étanchéité (12) de la lèvre d'étanchéité axiale (11a) est appuyée sur une surface d'appui (27,42) revêtue au moins localement, respectivement partiellement d'un revêtement limitant la friction.

14. Joint d'étanchéité selon la revendication 1, dans lequel la lèvre d'étanchéité (11a) présente une structure façonnée du côté interne dans la direction de la surface d'appui (27), respectivement de l'axe de symétrie (5), laquelle structure (14) est notamment conçue pour les deux sens de rotation.

15. Joint d'étanchéité selon la revendication 1, dans lequel la lèvre d'étanchéité axiale (11a,40) du joint d'étanchéité (1a, 1e) coopère avec une douille centrifugeuse rotative (23) ou avec une bague centrifugeuse rotative (43).

16. Joint d'étanchéité selon la revendication 15, dans lequel la douille centrifugeuse (23) et la bague centrifugeuse (43) sont fixées en position sur l'arbre rotatif (19).

17. Joint d'étanchéité selon la revendication 15, dont la douille centrifugeuse (23) entoure l'arbre (19) par une portion cylindrique (25) et dont le bord radial forme une portion (26), sur la surface d'appui de laquelle (27) la lèvre d'étanchéité axiale (11a) du joint d'étanchéité (1a) est appuyée.

18. Joint d'étanchéité selon la revendication 15, dans lequel la section cylindrique (25) de la douille centrifugeuse présente du côté frontal un biseau d'engagement (31) sur une surface de gaine (24), lequel biseau permet un montage séquentiel des composants joint d'étanchéité (1a) et douille centrifugeuse (23).

19. Joint d'étanchéité selon la revendication 1, dans lequel la lèvre d'étanchéité radiale et/ou la lèvre d'étanchéité axiale présentent deux ou plusieurs arêtes d'étanchéité (36 ou 37).

20. Joint d'étanchéité selon la revendication 1, dans lequel la lèvre d'étanchéité axiale (11a) du joint d'étanchéité (1a) inclut une pré-lèvre (29), qui s'étend à la position de pose du joint d'étanchéité (1a) jusqu'à un interstice (30) sur la surface d'appui (27).

21. Joint d'étanchéité selon la revendication 1, qui comprend comme moyen de ressort un ressort manchon (9) au diamètre (D) entourant la lèvre d'étanchéité radiale (1a), lequel est inséré dans une rainure annulaire (10) du joint d'étanchéité (1a) présentant la dimension ($D_0$), moyennant quoi le rapport de diamètre correspond à $D_0/D \geq 1,1$.

22. Joint d'étanchéité selon la revendication 21, dont le ressort manchon (9) présente un diamètre « D » $\leq$ 1,3 mm.

23. Joint d'étanchéité selon la revendication 1, qui comprend comme moyen de ressort un ressort sauteur (39) fendu, prétensionné radialement, qui entoure la lèvre d'étanchéité radiale (34,35).

24. Joint d'étanchéité selon la revendication 1, pour lequel un élastomère, notamment du HNBR est prévu comme matériau.

25. Joint d'étanchéité selon la revendication 1, pour lequel un caoutchouc fluoré comme du FPM ou du FKW est prévu comme matériau.

26. Joint d'étanchéité selon la revendication 1, qui est prévu afin d'isoler de manière étanche un roulement à billes conçu pour une pompe à eau d'un moteur, moyennant quoi le joint d'étanchéité (1a, 1e) inséré dans une rainure (3) ou un réceptacle cylindrique (44) de la bague de roulement (4) est appuyé par l'arête d'étanchéité (8,36,37) de la lèvre d'étanchéité radiale (7,34,35) directement sur l'arbre (19) ou la portion cylindrique (25) de la douille centrifugeuse (23) et l'arête d'étanchéité (12,41) de la lèvre d'étanchéité axiale (11a,40) du joint d'étanchéité (1a,1e) est appuyée sur la surface d'appui (27,42) orientée radialement de la douille centrifugeuse (23), respectivement de la bague centrifugeuse (43).

**Fig. 1**

**Fig. 1a**

**Fig. 1b**

# Fig. 2

# Fig. 2a

# Fig. 3

# Fig. 4

# Fig. 5

# Fig. 6

# Fig. 7

# Fig. 8